# EUROPEAN PATENT APPLICATION

(11) **EP 1 010 671 A2**
(43) Date of publication of application: **21.06.2000**
(21) Application number: 99123965.8
(22) Date of filing: 06.12.1999
(51) Int. Cl.: C03B 23/207, C03B 23/051

(54) **Method for obtaining glass structures**

(30) Priority: 16.12.1998 IT TV980160
(71) Applicant: Effetre Industriale S.p.A., 31023 Resana (Treviso) (IT)
(72) Inventor: Ferro, Ivano, 30033 Noale (Venezia) (IT)
(74) Representative: Modiano, Guido, Dr.-Ing.

(57) **Abstract**

A method for producing glass structures and glass structures obtained thereby which comprises the steps of placing in a heating furnace one or more first glass tubes (1) having a hollow cross-section, and heating, softening and melting said first tubes (1).

## Description

The present invention relates to a method for obtaining glass structures and to glass structures obtained thereby.

Nowadays it is known to obtain glass structures, such as for example glass plates, by using the following method: several solid glass rods are placed at an adapted plate which can be inserted in a heating furnace and are then heated until they melt.

In this condition, the glass rods collapse, assume a flat shape and are mutually joined so as to obtain the intended plate.

However, this conventional method has drawbacks: the resulting plates in fact have a characteristic which is monochrome or in any case linked to the particular arrangement of the individual glass rods; accordingly, if one wanted to obtain plates having different shades of color, one would have to melt additional rods thereon; this would be a difficult operation, since it would deform the already-made plate, with aesthetically unacceptable results.

The aim of the present invention is therefore to solve the mentioned problem, eliminating the drawbacks of the cited prior art by providing a method which allows to obtain glass structures which have different and chosen color combinations by using a single process step which allows the serially repeatable production of said structures.

Within the scope of this aim, an important object of the present invention is to provide a method which is easy and quick to carry out by using conventional plants.

Another important object is to provide a method which allows to obtain glass structures having low manufacturing costs.

This aim, these objects and others which will become apparent hereinafter are achieved by a method for obtaining glass structures, comprising the steps of:
a) placing in a heating furnace one or more first glass tubes having a hollow cross-section; and
b) heating, softening and melting said first tubes or rods.

Further characteristics and advantages of the invention will become apparent from the description of some particular but not exclusive embodiments, illustrated only by way of non-limitative example in the accompanying drawings, wherein:
Figure 1 is a perspective view of a plurality of first and second tubes or rods which are arranged on a plate which can be placed inside a heating furnace;
Figures 2, 3 and 4 are views, similar to Figure 1, of the steps for the softening and melting of the first and second tubes or rods until the glass structure is obtained;
Figure 5 is a sectional view, taken along a sectional plane arranged transversely to the first and second tubes or rods in the condition of Figure 1;
Figures 6 to 10 and Figures 11 to 15 are views, similar to Figures 1 to 5, of two other embodiments of the method according to the present invention.

With reference to the above figures, the reference numeral 1 designates a plurality of first tubes, made of glass and preferably having a cylindrical shape, which are arranged side by side on an adapted plate, designated by the reference numeral 2, which can be placed in an adapted heating furnace.

The first tubes 1 are therefore hollow.

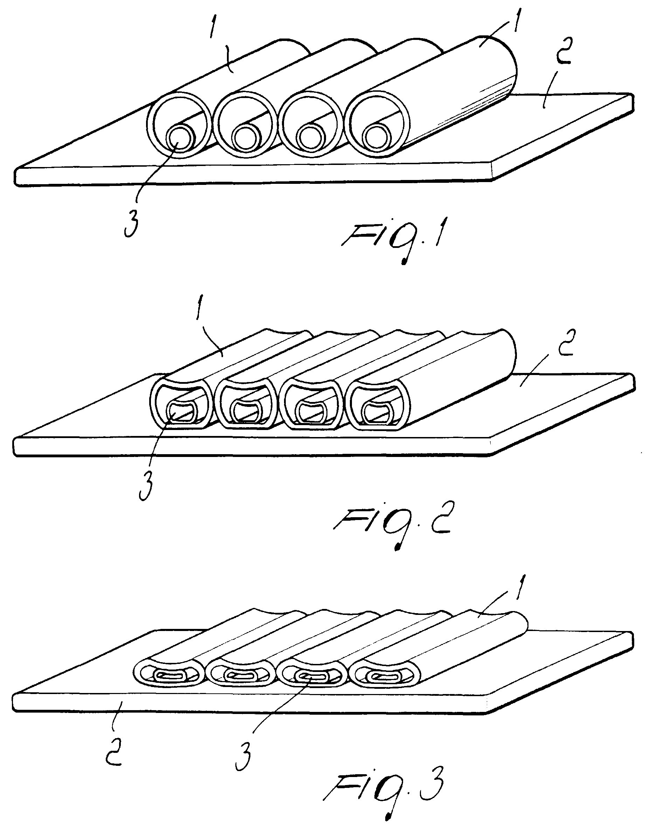

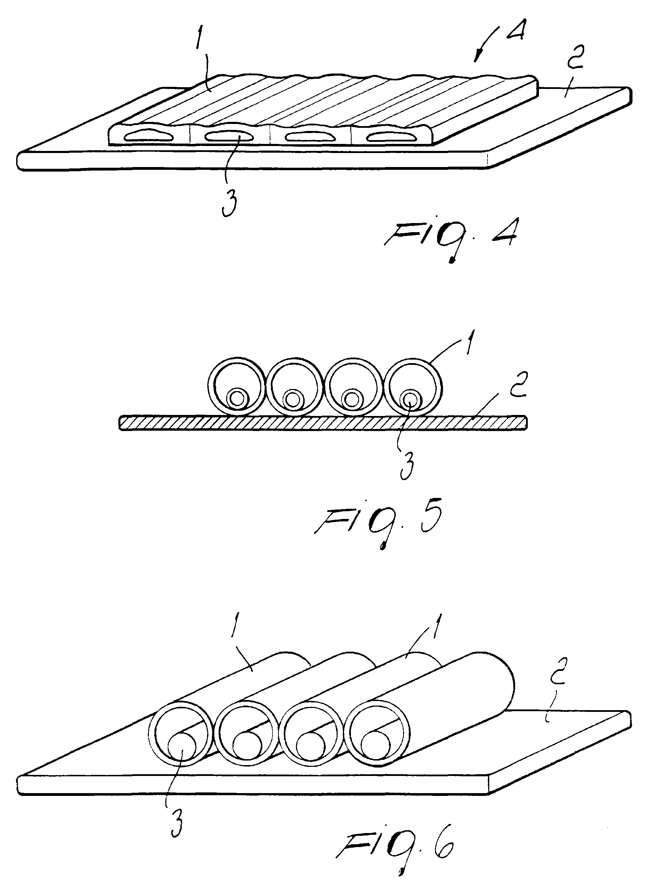

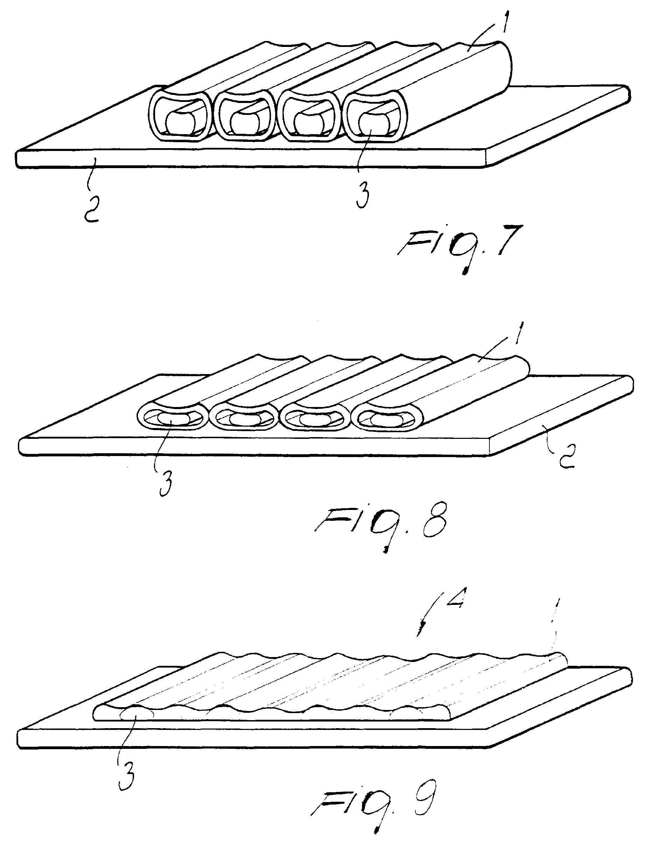

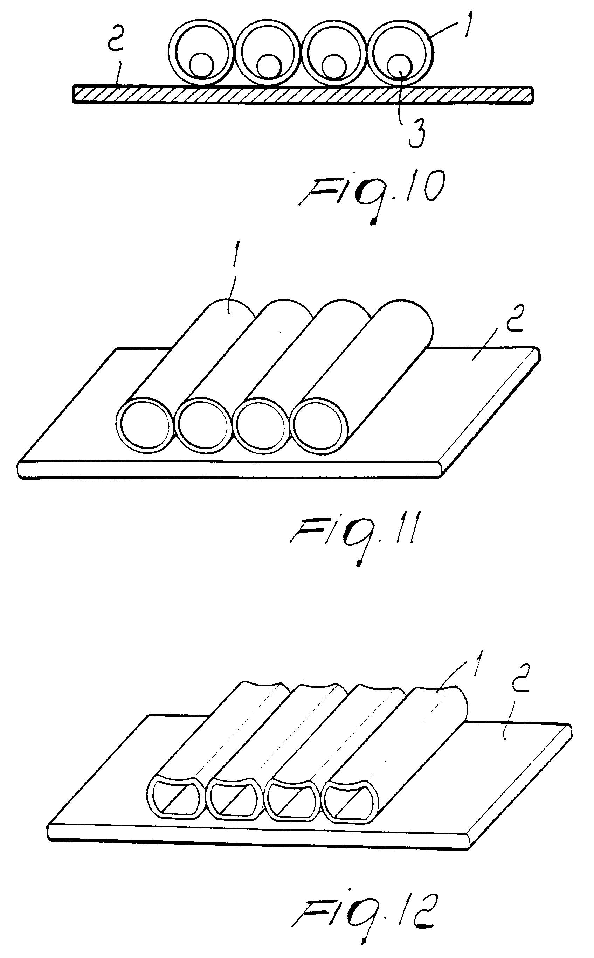

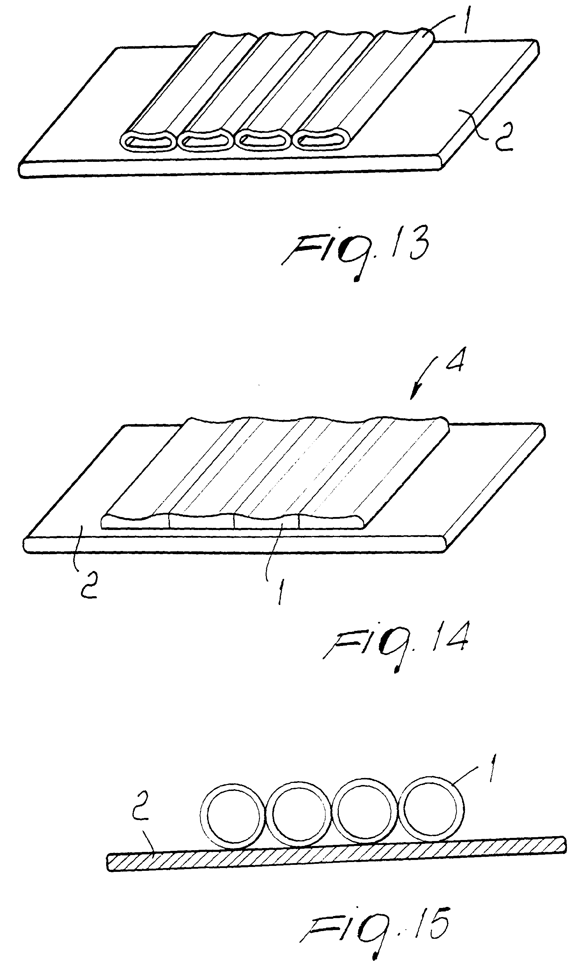

Second tubes or rods, designated by the reference numeral 3 and also made of glass, can optionally be arranged inside the first tubes 1 and advantageously are also cylindrical and in turn are hollow (as shown in Figures 1-5) and/or solid (as shown in Figures 6-10).

As an alternative, the geometric shape of the second tubes or rods 3 can be different according to the intended specific aesthetic characteristics to be achieved; for example, they can have a polygonal cross-section.

The method then entails placing in a heating furnace the plate 2 with the first tubes 1 and optionally with the second tubes or rods 3 arranged thereon, and then heating the tubes or rods 1, 3 until initial softening is achieved, as shown in Figures 2 and 3, 7 and 8, 12 and 13, in which the first tubes 1 and optionally the second tubes or rods 3 collapse due to their own weight.

Further heating then leads to the melting of the first tubes 1 and of the second tubes or rods 3 so as to obtain a glass structure, designated by the reference numerals 4, 14 and 24, whose surface is undulated and in which the second tube or rod 3 provides a chosen aesthetic characteristic depending on its original geometric shape and on its initial coloring.

The three glass structures 4, 14 and 24 are the final product respectively of the three embodiments of the method according to the invention, which are illustrated in Figures 1-5, 6-10 and 11-15 respectively.

It has thus been observed that the method has achieved the intended aim and objects, allowing it to obtain, in a short time and at low costs, a glass structure which has different and chosen aesthetic characteristics with respect to what can be obtained with the described prior art.

Using only first hollow tubes 1 allows to obtain economic advantages with respect to the cited prior art because for an equal generated surface, the thicknesses are reduced considerably and therefore the costs of the resulting structures also are reduced.

The method is furthermore very fast, allowing to obtain a large number of glass structures whose aesthetic and shape characteristics can be repeated serially.

The invention is of course susceptible of numerous modifications and variations, all of which are within the scope of the same inventive concept.

The shapes and the dimensions and the colors of the first and second tubes or rods may of course also be the most pertinent according to specific requirements.

The disclosures in Italian Patent Application No. TV98A000160 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for obtaining glass structures, characterized in that it comprises the steps of:
a) placing in a heating furnace one or more first glass tubes (1) having a hollow cross-section; and
b) heating, softening and melting said first tubes (1).

2. The method according to claim 1, characterized in that said first glass tubes have a hollow cross-section and the step of placing in a heating furnace one or more first glass tubes comprises the step of inserting one or more second glass tubes inside said one or more first glass tubes.

3. The method according to claim 1, characterized in that said one or more first glass tubes are arranged mutually side by side on a plate, said plate being adapted to be inserted into said heating furnace with the said first glass tubes thereon.

4. The method according to claim 2, characterized in that said first and second glass tubes are cylindrical.

5. The method according to claim 2, characterized in that said first and second glass tubes have a polygonal cross-section.

6. The method according to claim 1, characterized in that said heating step is performed until initial softening of said first glass tubes is achieved, followed by a collapse of said tubes and by said melting step so as to obtain said glass structure.

7. A glass structure, characterized in that it is constituted by at least first glass tubes arranged mutually side by side and heated so as to obtain a single glass structure with an undulated surface.

8. The glass structure of claim 7, characterized in that said first glass tubes are internally hollow and accommodate second glass tubes.

9. The glass structure of claim 8, characterized in that said first and second glass tubes have respectively equal or different geometric shape and/or coloring, so as to provide an undulated surface with a chosen aesthetic characteristic.
